# EUROPÄISCHE PATENTANMELDUNG

(11) **EP 1 323 966 A1**
(43) Veröffentlichungstag der Anmeldung: **02.07.2003**
(21) Anmeldenummer: 02027156.5
(22) Anmeldetag: 05.12.2002
(51) Int. Cl.: F16K 31/06, F23N 1/00

(54) **Vorrichtung und Verfahren zum Regeln und Absperren eines Fluidstromes**

(30) Priorität: 21.12.2001 DE 10163588; 28.03.2002 DE 10213935
(71) Anmelder: G. Kromschröder Aktiengesellschaft, D-49074 Osnabrück (DE)
(72) Erfinder: Dalsass, Karl. G., 49479 Ibbenbüren (DE); Wald, Stephan, 48341 Altenberge (DE)
(74) Vertreter: Harlacher, Mechthild, Dipl.-Ing.

(57) **Zusammenfassung**

Die Erfindung betrifft eine Vorrichtung und ein Verfahren zum Regeln und Absperren eines Fluidstromes, insbesondere eines Gasstromes zu einer Gasverbrauchseinrichtung, mit mindestens einem Ventil, das einen Ventilkörper (8) aufweist, der in einem Gehäuse (2, 2a) einer Durchtrittsöffnung (5) mit mindestens einem Ventilsitz zugeordnet ist, mit einem ersten Stellantrieb (3), der an einen Regelkreis angeschlossen ist und der auf den Ventilkörper (8) einwirkt sowie mit einem zweiten Stellantrieb (4), der eine Spule (10), einen äußeren Eisenkreis (15, 15a),einen mit dem Ventilkörper (8) verbundenen axial beweglichen Anker (11), ein Polstück (12) und eine Schließfeder (13) aufweist, wobei zwischen dem Anker (11) und dem Polstück (12) ein Arbeitsluftspalt (14) gebildet wird.

Erfindungsgemäß ist das Polstück (12) axialbeweglich und mittels des ersten Stellantriebs (3) gegen den Anker (11) bewegbar, um den Arbeitsluftspalt (14) auf einen Grenzwert einzustellen. Der Wirkungsgrad des Magnetkreises kann auf diese Weise mehr als verdoppelt werden.

## Beschreibung

Die Erfindung betrifft eine Vorrichtung und ein Verfahren zum Regeln und Absperren eines Fluidstromes, insbesondere eines Gasstromes zu einer Gasverbrauchseinrichtung, mit mindestens einem Ventil, das einen Ventilkörper aufweist, der in einem Gehäuse einer Durchtrittsöffnung mit mindestens einem Ventilsitz zugeordnet ist, mit einem ersten Stellantrieb, der an einen Regelkreis angeschlossen ist und der auf den Ventilkörper einwirkt sowie mit mindestens einem zweiten Stellantrieb, der eine Spule, einen äußeren Eisenkern, einen mit dem Ventilkörper verbundenen axial beweglichen Anker, ein Polstück und eine Schließfeder aufweist, die den Ventilkörper in Schließrichtung belastet, wobei zwischen dem Anker und dem Polstück ein Arbeitsluftspalt gebildet wird.

Eine derartige Sicherheits- und Regelkombination wird insbesondere zum Regeln und Absperren der Gaszufuhr zu Gasverbrauchseinrichtungen, in der Regel Industriebrennern, verwendet.

Der erste Stellantrieb, der zur Regelung dient, erhält Stellsignale von einem Regelkreis, beispielsweise zum Regeln des Gas-/Luftverhältnisses bei der Verbrennung. Es kann sich um einen elektrisch-, magnetisch- oder steuerluftbetriebenen Stellmotor handeln. Eine Motorspindel wird durch das gehäusefest angeordnete Polstück hindurchgeführt und verstellt den Ventilkörper.

Der zweite Stellantrieb, der als elektromagnetischer Antrieb ausgebildet ist, dient zum Absperren des Fluidstromes, beispielsweise eines Gasstroms zu einem Gasbrenner. Der Gasstrom wird im Normalfall abgesperrt bzw. unterbrochen, wenn der Brenner abgeschaltet wird oder im Notfall, z. B. bei einem Stromausfall.

Beim normalen Betrieb des Gasbrenners liegt an der Spule des zweiten Stellantriebs eine Spannung an. Der Anker wird durch die Magnetkräfte gegen die Kraft der Schließfeder zum Polstück gezogen, so dass der Ventilkörper die Durchtrittsöffnung freigibt.

In dieser Stellung nähert sich der Anker so weit an das Polstück heran, wie dies die Motorspindel zulässt. In jedem Fall muss der Anker vom Polstück durch einen Arbeitsluftspalt getrennt sein, um ein Hängen bzw. Ankleben des Ankers am Polstück durch Restmagnetkräfte im stromlosen Zustand der Spule zu vermeiden.

Die Breite des Arbeitsluftspaltes verändert sich während des Regelvorgangs, da der Anker gegenüber dem ortsfesten Polstück bewegt wird. Der Arbeitsluftspalt hat eine maximale Breite, wenn sich der Ventilkörper in der Schließstellung befindet.

Zum Öffnen des Ventils wird an der Spule eine Spannung angelegt, wodurch ein Magnetfeld entsteht. Der Anker wird mittels der Magnetkräfte gegen die Kraft der Schließfeder zum Polstück bewegt und dadurch der Ventilkörper angehoben. Der breite Arbeitsluftspalt in der Schließstellung führt zu einem geringen Wirkungsgrad des Magnetfeldes, das so dass die magnetische Energie entsprechend groß sein muss, um die notwendige mechanische Arbeit zum Anheben des Ventilkörpers zu verrichten. Die Spule benötigt daher eine relativ große elektrische Leistung bzw. eine große Wickelmasse.

Der Erfindung liegt daher die Aufgabe zugrunde, eine Vorrichtung der eingangs genannten Art zu schaffen, bei der der elektromagnetische Antrieb eine minimale Antriebsleistung benötigt.

Diese Aufgabe wird bei einer Vorrichtung der eingangs genannten Art durch die Merkmale des Anspruchs 1 gelöst.

Da das Polstück axial beweglich ist, kann es zum Anker hin verschoben werden, um den Arbeitsluftspalt auf einen Minimalwert einzustellen. Sobald an der Spule eine Spannung anliegt, werden Polstück und Anker durch die Magnetkräfte gekoppelt und werden beim Regelvorgang gemeinsam bewegt. Diese Lösung hat den Vorteil, dass der zweite Stellantrieb in einem energetisch optimalen Betriebspunkt arbeitet und deshalb nur ein minimaler Spulenaufwand erforderlich ist. Die erforderliche elektrische Leistung kann gegenüber dem Stand der Technik um mehr als die Hälfte reduziert werden.

Vorzugsweise ist der erste Stellantrieb als Linearantrieb ausgebildet, der eine Gewindespindel aufweist, die am Polstück angreift. Die Gewindespindel kann axial beweglich sein und einen Anschlag für das Polstück bilden.

Besonders vorteilhaft ist es, wenn das Polstück drehfest ist und eine axiale Gewindebohrung aufweist, in die Gewindespindel eingreift.

Wenn sich die Schließfeder einerseits am Polstück und andererseits am Anker abstützt, wird gleichzeitig mit der Einstellung des Arbeitsluftspalts auf vorteilhafte Art und Weise die Schließfeder vorgespannt.

Infolge des verringerten Spulenaufwands lässt sich die Baugröße der Vorrichtung beträchtlich reduzieren, insbesondere lassen sich das Polstück und der Anker relativ klein ausführen. Vorzugsweise werden Polstück und Anker als Scheiben ausgebildet.

Bei einer bevorzugten Ausführungsform sind zwei Ventile in einem gemeinsamen Gehäuse hintereinander im Gasstrom angeordnet. Beide Ventile dienen zum Absperren eines Fluidstromes und weisen jeweils ein axialbewegliches Polstück und einen Anker mit einen Ventilkörper auf. Allerdings ist nur das stromauf angeordnete Ventil mit einer Spule versehen. Diese ist in der Lage, beide Ventilkörper anzutreiben, weil die benötigten Kräfte gering sind. Beide Ventile weisen einen gemeinsamen äußeren Eisenkreis auf, der derart ausgebildet ist, dass er stets mit beiden Polstücken und mit beiden Ankern im Eingriff ist. Der konstruktive Aufwand für eine derartige Ausführungsform mit zwei Ventilen verringert sich erheblich, da praktisch ein Magnetantrieb eingespart werden kann.

Es ist auch möglich, dass nur eines der beiden Ventile einen ersten Stellantrieb aufweist.

Die Erfindung schafft ferner ein Verfahren zum Regeln und Absperren eines Fluidstromes, insbesondere eines Gasstromes zu einer Gasverbrauchseinrichtung, mit mindestens einem Ventil, das einen Ventilkörper aufweist, der in einem Gehäuse eine Durchtrittsöffnung drosselt oder absperrt, wobei der Ventilkörper von einem ersten und einem zweiten Stellantrieb verstellt wird, wobei der zweite Stellantrieb eine Spule, einen äußeren Eisenkern, einen mit dem Ventilkörper verbundenen axialbeweglichen Anker, ein Polstück und eine Schließfeder aufweist, die den Ventilkörper in Schließrichtung belastet, wobei zwischen dem Anker und dem Polstück ein Arbeitsluftspalt gebildet wird. Erfindungsgemäß bewegt der erste Stellantrieb das Polstück im stromlosen Zustand der Spule gegen den Anker, um den Arbeitsluftspalt auf einen Grenzwert einzustellen.

Die Erfindung wird im Folgenden anhand bevorzugter Ausführungsbeispiele der erfindungsgemäßen Vorrichtung im Zusammenhang mit der Zeichnung näher erläutert.

Die Zeichnung zeigt in:
- Fig. 1:: einen schematischen Schnitt durch eine Ausführungsform nach dem Stand der Technik;
- Fig. 2:: einen schematischen Schnitt durch eine erste Ausführungsform der erfin- dungsgemäßen Vorrichtung in geschlossenem Zustand;
- Fig. 3:: einen schematischen Schnitt durch die Ausführungsform nach Fig. 2 in geöffnetem Zustand;
- Fig. 4:: einen schematischen Schnitt durch eine zweite Ausführungsform der erfin- dungsgemäßen Vorrichtung in teilweise geöffnetem Zustand.

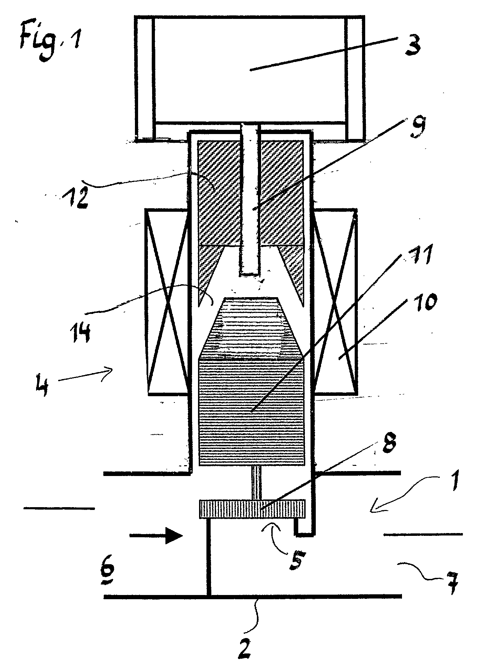

Die Vorrichtung nach Fig. 1 stellt den Stand der Technik dar. Die Vorrichtung umfasst ein Ventil 1, ein Gehäuse 2, einen ersten Stellantrieb 3 sowie einen zweiten Stellantrieb 4.

Das Gehäuse 2 weist eine Durchtrittsöffnung 5 auf, die zwischen einem Einlasskanal 6 und einem Auslasskanal 7 angeordnet ist. Der Durchtrittsöffnung 5, die auf bekannte Art und Weise einen nicht dargestellten Ventilsitz aufweist, ist ein Ventilkörper 8 zugeordnet. Der Ventilkörper 8 ist durch eine nicht dargestellte Schließfeder in Schließrichtung beaufschlagt.

Der zweite Stellantrieb 4 weist eine Spule 10 auf, die einen axialbeweglichen Anker 11 und ein Polstück 12 umgibt. Das Polstück 12 ist gehäusefest angeordnet. Die Spule 10 ist stromlos, d. h. das Ventil ist geschlossen.

Zwischen dem Polstück 12 und dem Anker 11 befindet sich ein relativ breiter Arbeitsluftspalt 14. Wenn nun an die Spule 10 eine Spannung angelegt wird, um den Ventilkörper 8 vom Ventilsitz abzuheben, d. h. um das Ventil zu öffnen, arbeitet der Magnetkreis im Bereich sehr geringer Wirkungsgrade.

Bei dem ersten Stellantrieb 3 handelt es sich um einen elektrischen Stellmotor, der eine axialbewegliche Spindel 9 aufweist, die am Anker 11 bzw. am Ventilkörper 8 einen Anschlag bildet.

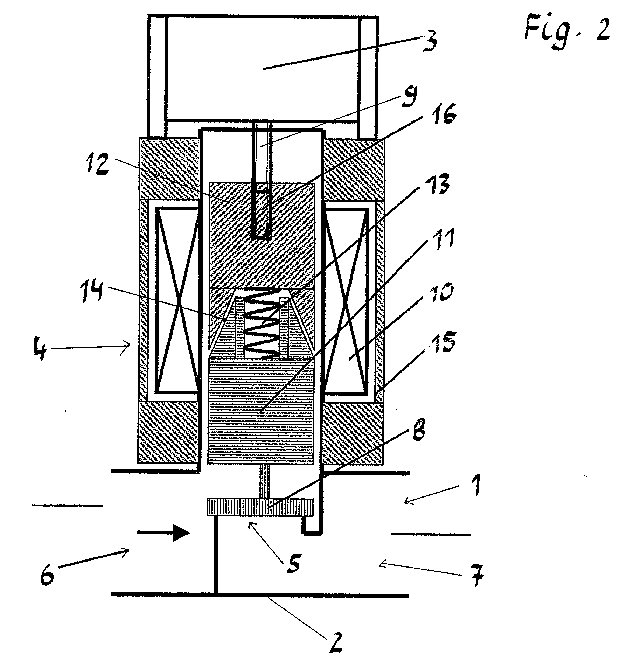

Fig. 2 zeigt eine erfindungsgemäße Vorrichtung, die in der Schließstellung dargestellt ist. Ein Ventil 1 dient zum Absperren und Regeln eines Gasstroms zu einem nicht dargestellten Gasbrenner und weist ein Gehäuse 2, einen ersten Stellantrieb 3 und einen zweiten Stellantrieb 4 auf.

Das Gehäuse 2 weist eine Durchtrittsöffnung 5 auf, die zwischen einem Einlasskanal 6 und einem Auslasskanal 7 angeordnet ist. Der Durchtrittsöffnung 5, die auf bekannte Art und Weise einen nicht dargestellten Ventilsitz aufweist, ist ein Ventilkörper 8 zugeordnet.

Der erste Stellantrieb 3 ist als Linearantrieb ausgebildet, der eine Gewindespindel 9 aufweist. Der erste Stellantrieb 3 erhält in bekannter, nicht dargestellter Art und Weise Stellsignale aus einem Regelkreis, der z. B. das Gas-/Luftverhältnis bei der Verbrennung regelt.

Der zweite Stellantrieb 4 weist eine Spule 10 auf, die einen axialbeweglichen Anker 11 und ein ebenfalls axialbewegliches Polstück 12 umgibt. Das Polstück ist drehfest und weist eine Gewindebohrung 16 auf, in die die Gewindespindel 9 eingreift. Das Ventil ist geschlossen.

Zwischen dem Anker 11 und dem Polstück 12 ist eine Schließfeder 13 angeordnet, die zum Schließen des Ventils im stromlosen Zustand der Spule dient. Die Schließfeder 13 ist derart vorgespannt, dass die Remanenz, d. h. die nach dem Abschalten des Stroms verbleibende permanent Magnetisierung beim Schließvorgang überwunden werden kann. Die Spule 10 ist von einem äußeren Eisenkreis 15 umgeben.

Die Gewindespindel 9 greift in die Gewindebohrung 16 im Polstück 12 ein und verschiebt dieses in Richtung auf den Anker 11, so dass der Arbeitsspalt 14 auf einen Minimalwert eingestellt und die Schließfeder 13 gespannt wird, bevor an die Spule 10 eine Spannung angelegt wird. Dies kann beispielsweise in einer Initialisierungsphase jeweils vor einem Brennerstart geschehen. Es ist allerdings auch möglich, das Polstück bei bestromter Spule vor dem Regelvorgang an den Anker heranzubewegen.

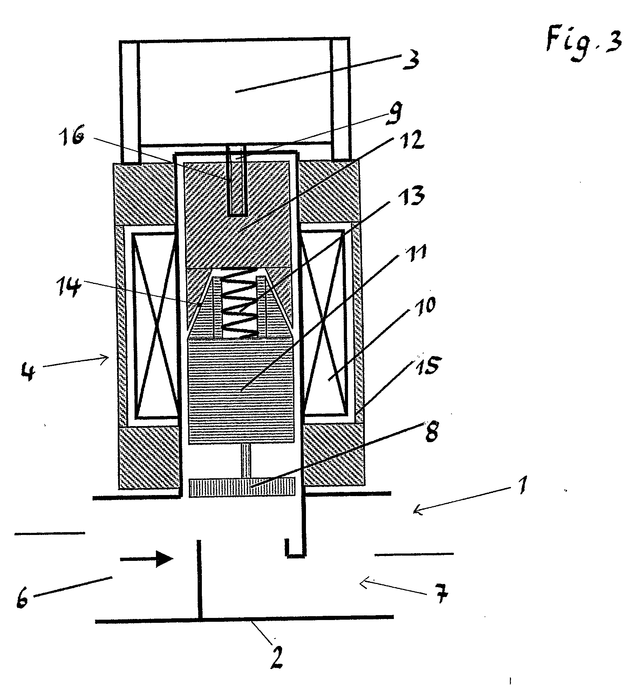

In Fig. 3 ist die Vorrichtung nach Fig. 2 nach Anlegen einer Spannung an die Spule 10 in geöffnetem Zustand dargestellt. Zum Regeln greift der erste Stellantrieb 3 am Polstück 12 an und verschiebt das Polstück 12 gemeinsam mit dem Anker 11 und dem Ventilkörper 8. In jedem Fall sind das Polstück und der Anker mit dem äußeren Eisenkreis 15 im Eingriff.

Der erste Stellantrieb 3 kann zum Schließen des Ventils im Regelfall, d. h. wenn der Brenner abgeschaltet wird, eingesetzt werden.

Der zweite Stellantrieb 4 wird zur Sicherheitsabschaltung eingesetzt. Dabei wird die Stromzufuhr zur Spule 10 unterbrochen. Die Schließfeder 13 sorgt dafür, dass nach dem Abschalten des Stroms das Ventil geschlossen wird.

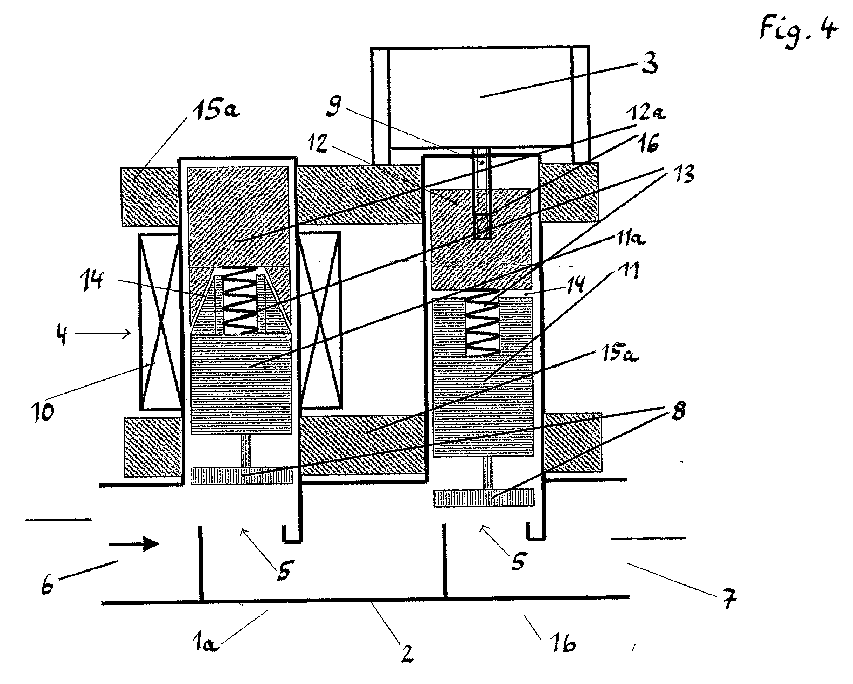

In Fig. 4 ist eine sogenannte Kompaktarmatur dargestellt. Zwei Ventile 1a und 1b sind in einem gemeinsamen Gehäuse 2 angeordnet. Das in Strömungsrichtung stromauf liegende Ventil1a dient ausschließlich als Absperrventil und weist daher keinen ersten Stellantrieb, sondern lediglich einen zweiten Stellantrieb 4 auf. Das stromab angeordnete Ventil 1b dient als Absperr- und Regelventil. Der erste Stellantrieb 3 erhält in bekannter, nicht dargestellter Art und Weise Stellsignale aus einem Regelkreis, der z. B. das Gas-/Luftverhältnis bei der Verbrennung regelt. Das Polstück ist drehfest und weist eine Gewindebohrung 16 auf, in die die Gewindespindel 9 eingreift. Der erste Stellantreib hat das Polstück 12 in Richtung auf den Anker 11 verschoben, so dass der Arbeitsspalt 14 auf einen Minimalwert eingestellt und die Schließfeder 13 gespannt wird, bevor an die Spule 10 eine Spannung angelegt worden ist. Der Arbeitsspalt 14 des Ventils 1b ist als waagerechter Spalt ausgeführt. Das Ventil 1b ist teilweise geöffnet. Das Ventil 1a ist geöffnet. Beim Ventil 1a umgibt die Spule 10 das Polstück 12a und den Anker 11a. Die Spule 10 dient auch als Antrieb für das Ventils 1b. Es muss lediglich gewährleistet sein, dass die Polstücke 12a, 12 und die Anker 11a, 11 stets im Eingriff mit dem äußeren Eisenring 15a sind, so dass sich über beide Ventile 1a, 1b ein gemeinsamer Magnetkreis bildet. Auf diese Weise kann ein Magnetantrieb eingespart werden.

Im Rahmen der Erfindung sind ohne weiteres Abwandlungsmöglichkeiten gegeben: So kann die in Fig. 4 dargestellte Kompaktarmatur auch mit zwei Absperr- und Regelventilen ausgeführt werden. In diesem Fall weisen sowohl das Ventil 1b als auch das Ventil 1b einen ersten Stellantrieb 3 auf.

Die Erfindung ermöglicht es, die Vorrichtung beträchtlich zu verkleinern. Die Polstücke und die Anker können beispielsweise als flache Scheiben ausgeführt werden. Weiterhin kann der erste Stellantrieb als Magnetantrieb oder steuerluftbetriebener Antrieb ausgeführt werden. Der Arbeitsluftspalt kann eine beliebige Form aufweisen. Schließlich kann der äußere Eisenkreis auf beliebige Art und Weise ausgeführt werden.

### Bezugszeichenliste:

- 1: Ventil
- 2: Gehäuse
- 3: erster Stellantrieb
- 4: zweiter Stellantrieb
- 5: Durchtrittsöffnung
- 6: Einlasskanal
- 7: Auslasskanal
- 8: Ventilkörper
- 9: Motorspindel
- 10: Spule
- 11: Anker
- 12: Polstück
- 13: Schließfeder
- 14: Arbeitsluftspalt
- 15: äußerer Eisenkreis
- 16: Gewindebohrung

## Patentansprüche

1. Vorrichtung zum Regeln und Absperren eines Fluidstromes, insbesondere eines Gasstromes zu einer Gasverbrauchseinrichtung, mit mindestens einem Ventil (1), das einen Ventilkörper (8) aufweist, der in einem Gehäuse (2) eine Durchtrittsöffnung (5) mit mindestens einem Ventilsitz zugeordnet ist, mit einem ersten Stellantrieb (3), der an einen Regelkreis angeschlossen ist und der auf den Ventilkörper einwirkt, mit einem zweiten Stellantrieb (4) der eine Spule (10), einen äußeren Eisenkreis (15), einen mit dem Ventilkörper (8) verbundenen axialbeweglichen Anker (11), ein Polstück (12) und eine Schließfeder (13) aufweist, die den Ventilkörper (8) in Schließrichtung belastet, wobei zwischen dem Anker (11) und dem Polstück (12) ein Arbeitsluftspalt (14) gebildet wird,
**dadurch gekennzeichnet,**
**dass** das Polstück (12) axialbeweglich und mittels des ersten Stellantriebs (3) gegen den Anker (11) bewegbar ist, um den Arbeitsluftspalt (14) auf einen Grenzwert einzustellen.

2. Vorrichtung nach Anspruch 1,
**dadurch gekennzeichnet, dass** der erste Stellantrieb (3) als Linearantrieb ausgebildet ist, der eine Gewindespindel (9) aufweist, die am Polstück (12) angreift.

3. Vorrichtung nach Anspruch 2,
**dadurch gekennzeichnet, dass** das Polstück (12) drehfest ist und eine axiale Gewindebohrung (16) aufweist, in die die Gewindespindel (9) eingreift.

4. Vorrichtung nach einem der Ansprüche 1 bis 3,
**dadurch gekennzeichnet, dass** sich die Schließfeder (13) einerseits am Polstück (12) und andererseits am Anker (11) abstützt.

5. Vorrichtung nach einem der Ansprüche 1 bis 4,
**dadurch gekennzeichnet, dass** das Polstück (12) und der Anker (11) als Scheiben ausgebildet sind.

6. Vorrichtung nach einem der Ansprüche 1 bis 5,
**dadurch gekennzeichnet, dass** zwei Ventile (1a, 1b) in einem gemeinsamen Gehäuse (2a) in Strömungsrichtung hintereinander angeordnet sind, wobei die beiden zweiten Stellantriebe (4) eine gemeinsame Spule (10) und einen gemeinsamen äußeren Eisenkreis (15a) aufweisen, der derart ausgebildet ist, dass er stets mit beiden Polstücken (12) und mit beiden Ankern (11) im Eingriff ist.

7. Vorrichtung nach Anspruch 6,
**dadurch gekennzeichnet**, das nur eines der beiden Ventile (1b) einen ersten Stellantrieb (3) aufweist.

8. Verfahren zum Regeln und Absperren eines Fluidstromes, insbesondere eines Gasstromes zu einer Gasverbrauchseinrichtung, mit mindestens einem Ventil, das einen Ventilkörper aufweist, der in einem Gehäuse eine Durchtrittsöffnung drosselt oder absperrt, wobei der Ventilkörper von einem ersten und einem zweiten Stellantrieb verstellt wird, wobei der zweite Stellantrieb eine Spule, einen äußeren Eisenkern, einen mit dem Ventilkörper verbundenen axialbeweglichen Anker, ein Polstück und eine Schließfeder aufweist, die den Ventilkörper in Schließrichtung belastet, und wobei zwischen dem Anker und dem Polstück ein Arbeitsluftspalt gebildet wird,
**dadurch gekennzeichnet,**
**dass** der erste Stellantrieb das Polstück im stromlosen Zustand der Spule gegen den Anker bewegt, um den Arbeitsluftspalt auf einen Grenzwert einzustellen.
